# EUROPÄISCHE PATENTSCHRIFT

(11) **EP 1 400 877 B1**
(45) Veröffentlichungstag und Bekanntmachung des Hinweises auf die Patenterteilung: **07.11.2007**
(21) Anmeldenummer: 03020280.8
(22) Anmeldetag: 08.09.2003
(51) Int. Cl.: G05B 19/042

(54) **Regler und Verfahren zum Betreiben eines Reglers**
Controller and method for operating a controller
Régulateur et procédé pour faire fonctionner un régulateur

(30) Priorität: 20.09.2002 DE 10243856
(43) Veröffentlichungstag der Anmeldung: 24.03.2004
(73) Patentinhaber: SIEMENS AKTIENGESELLSCHAFT, 80333 München (DE)
(72) Erfinder: Heinemann, Gerhard, Dr., 91058 Erlangen (DE)

(56) Entgegenhaltungen:
- WO-A-01/23971
- WO-A-01/47099
- US-A- 5 421 017
- US-B1- 6 263 487
- US-B1- 6 397 385

## Beschreibung

Die Erfindung betrifft ein Verfahren zum Betreiben eines Reglers, insbesondere eines Antriebsreglers.

Zum Regeln einer Anlage, insbesondere eines Antriebs, werden einige Funktionen des Reglers dauerhaft und andere Funktionen nur temporär benötigt. Die Funktionen, die dauerhaft benötigt werden, bezeichnet man auch als Grundfunktionen des Reglers. Hierbei handelt es sich zum Beispiel um eine Stromregelung oder Drehzahlregelung für zum Beispiel den zu regelnden Antrieb. Die anderen Funktionen, die nur temporär benötigt werden, bezeichnet man auch als Zusatzfunktionen. Bei solchen nur temporär, zum Beispiel während einer Inbetriebnahme, benötigten Zusatzfunktionen kann es sich zum Beispiel um Diagnosetools oder Einrichttools handeln.

Da einerseits auf dem Regler nur beschränkte Hardware-Ressourcen vorhanden sind und andererseits die Zusatzfunktionen in der Regel von der konkret zu regelnden Anlage abhängig sind, war es bisher nicht, nur teilweise oder nur mit großem Aufwand möglich, neben den Grundfunktionen zum Beispiel anlagenspezifische oder anwendungsspezifische Zusatzfunktionen in den Regler zu integrieren.

Aus der US 6,263,487 B1 ist ein programmierbarer Regler zur Verwendung in einem verteilten Automatisierungsnetzwerk bekannt. In den Regler sind über das Internet dynamisch Funktionsblöcke ladbar.

Aus US 5,421,017 ist ferner ein Echtzeit-Regelungssystem und ein Verfahren zum Austausch von Software in dem geregelten System bekannt. Aus US 6,397,385 B1 ist ein Telekommunikationssystem bekannt, in dem während des Betriebs des Systems ein Software-Upgrade vorgenommen werden kann. Schließlich ist aus WO 01 / 23 971 A1 ein umprogrammierbares Feldgerät in einem verteilten Prozessregelungssystem bekannt.

Weiterer Stand der Technik ist aus DE 198 35 416 A1 und WO 01/47099 A1 bekannt.

Hiervon ausgehend liegt der vorliegenden Erfindung das Problem zu Grunde, ein neuartiges Verfahren zum Betreiben eines Reglers zu schaffen.

Das erfindungsgemäße Verfahren ist durch die Merkmale des Anspruchs 1 gekennzeichnet.

Erfindungsgemäß verfügt der Regler über einen ersten Funktionsblock für mindestens eine festinstallierte Reglerfunktion und über einen zweiten Funktionsblock für mindestens eine nachladbare Reglerfunktion. Der zweite Funktionsblock ist während des Betriebs des Reglers nachladbar und/oder überladbar. Hierdurch ist es möglich, während des Betriebs des Reglers und damit ohne Unterbrechung der Regelung eine nur temporär benötigte Zusatzfunktion im Bedarfsfall zum Beispiel aus dem Internet zu laden oder eine bereits geladene, nur temporär benötigte Zusatzfunktion durch eine andere temporär benötigte Zusatzfunktion zu überladen oder zu überschreiben.

Nach einer vorteilhaften Weiterbildung der Erfindung sind im ersten Funktionsblock mehrere Echtzeit-Grundfunktionen des Reglers und im zweiten Funktionsblock mindestens eine Echtzeit-Zusatzfunktion des Reglers gespeichert und/oder speicherbar, wobei während des Betriebs bzw. der Ausführung der oder jeder Echtzeit-Grundfunktion ohne Unterbrechung derselben die oder jede Echtzeit-Zusatzfunktion in den zweiten Funktionsblock nachladbar und/oder überladbar sowie startbar bzw. ausführbar ist. Dies ermöglicht einen schonenden Umgang mit den Hardware-Ressourcen des Reglers, da die Zusatzfunktionen nur im Bedarfsfall in den Regler geladen und auch überschrieben werden können.

Vorzugsweise ist eine Laufzeitüberwachungs-Einrichtung und eine Speicherplatzzugriffsüberwachungs-Einrichtung vorhanden.

Die Laufzeitüberwachungs-Einrichtung ermittelt die von der oder jeden Echtzeit-Zusatzfunktion benötigte Rechenzeit, wobei dann, wenn die benötigte Rechenzeit eine vorgegebene Referenzzeit überschreitet, die oder jede Echtzeit-Zusatzfunktion abgebrochen wird.

Die Speicherplatzzugriffsüberwachungs-Einrichtung überwacht Speicheradressen, auf die von der oder jeden Echtzeit-Zusatzfunktion zugegriffen wird, wobei dann, wenn diese Speicheradressen nicht vorgegebenen Referenzspeicheradressen entsprechen, die für die Echtzeit-Zusatzfunktionen reserviert sind, die oder jede Echtzeit-Zusatzfunktion abgebrochen wird.

Durch diese erfindungsgemäße Ausgestaltung des Reglers kann auf einfache Art und Weise sichergestellt werden, dass die Funktionalität der Grundfunktionen des Reglers beim Laden einer Zusatzfunktion nicht beeinträchtigt wird.

Bevorzugte Weiterbildungen der Erfindung ergeben sich aus den Unteransprüchen und der nachfolgenden Beschreibung.

Nachfolgend wird ein bevorzugtes Ausführungsbeispiel der Erfindung - ohne hierauf beschränkt zu sein - anhand der Zeichnung näher erläutert. In der Zeichnung zeigt:
- FIG 1: ein Blockschaltbild eines erfindungsgemäßen Reglers,
- FIG 2: ein detailliertes Blockschaltbild des erfindungsgemäßen Reglers,
- FIG 3: ein Diagramm zur Visualisierung der Zeitüberwachungsfunktionalität des erfindungsgemäßen Reglers, und
- FIG 4: ein weiteres Diagramm zur Visualisierung der Zeitüberwachungsfunktionalität des erfindungsgemäßen Reglers.

Nachfolgend wird die Erfindung am Beispiel eines Antriebsreglers exemplarisch beschrieben. Selbst dann, wenn die Erfindung bei einem Antriebsregler besonders vorteilhaft verwendet werden kann, so soll die Erfindung auf diesen konkreten Anwendungsfall nicht beschränkt sein.

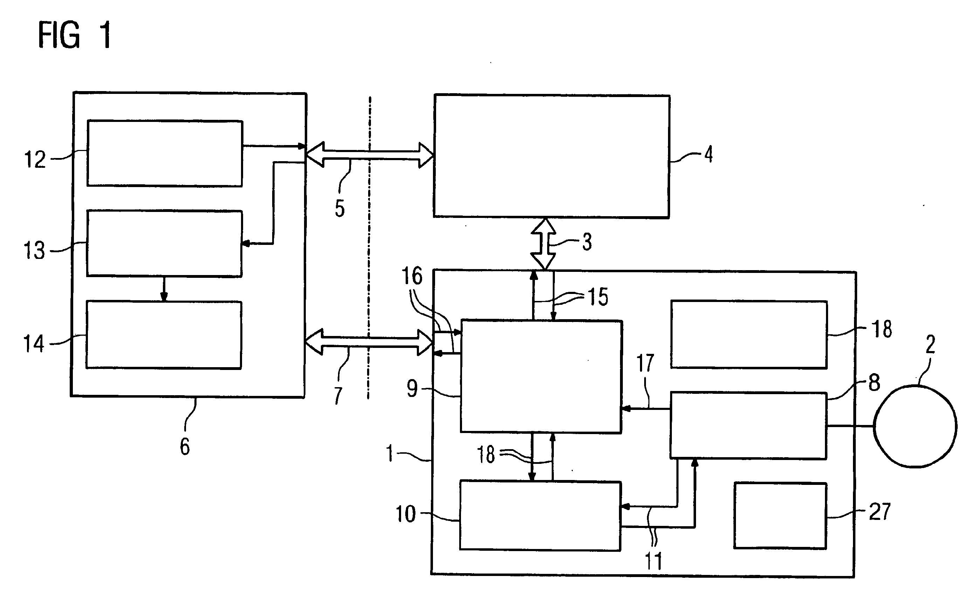

FIG 1 zeigt einen Antriebsregler 1, der mit einem zu regelnden Antrieb, nämlich einem Motor 2, verbunden ist. Gemäß FIG 1 ist der Antriebsregler 1 über eine Busverbindung 3 mit einer übergeordneten Automatisierungseinrichtung 4 verbunden. Über die Busverbindung 3 können der Antriebsregler 1 und die Automatisierungseinrichtung 4 Daten austauschen.

Weiterhin zeigt FIG 1, dass die übergeordnete Automatisierungseinrichtung 4 über eine Internetverbindung 5 mit einer weiteren Automatisierungseinrichtung 6 in Verbindung steht und über diese Internetverbindung 5 mit der Automatisierungseinrichtung 6 Daten austauschen kann. Wie FIG 1 weiterhin zeigt, kann jedoch auch der Antriebsregler 1 als solcher über eine Internetverbindung 7 mit der weiteren Automatisierungseinrichtung 6 verbunden sein. In diesem Fall würde der Antriebsregler 1 unmittelbar ohne Zwischenschaltung der übergeordneten Automatisierungseinrichtung 4 mit der Automatisierungseinrichtung 6 Daten austauschen.

Mithilfe des Antriebsreglers 1 soll der Motor 2 in Echtzeit geregelt werden. Die für die Regelung des Motors 2 unbedingt erforderlichen Echtzeit-Grundfunktionen des Antriebsreglers 1 sind hierzu in einem ersten Funktionsblock 8 des Antriebsreglers 1 abgelegt. Bei diesen unabdingbaren Echtzeit-Grundfunktionen des Antriebsreglers 1 kann es sich zum Beispiel um eine Stromregelung oder Drehzahlregelung für den Motor 2 handeln. Diese Echtzeit-Grundfunktionen des Antriebsreglers 1 werden zur Regelung des Motors 2 permanent benötigt und sind von maschinenspezifischen oder kundenspezifischen Anforderungen in der Regel weitestgehend unabhängig. Die Echtzeit-Grundfunktionen sind daher im ersten Funktionsblock des Antriebsreglers 1 fest installiert.

Häufig ist es vom Anwender gewünscht, dass der Antriebsregler 1 neben den festinstallierten Echtzeit-Grundfunktionen weitere Funktionen realisiert. Hierbei handelt es sich um sogenannte Echtzeit-Zusatzfunktionen, die einerseits nicht über die gesamte Betriebsdauer des Motors 2 hinweg benötigt werden und die andererseits von maschinenspezifischen und kundenspezifischen Anforderungen abhängig sind.

Damit der Antriebsregler 1 auch solche Echtzeit-Zusatzfunktionen neben den Echtzeit-Grundfunktionen realisieren kann, verfügt der Antriebsregler 1 erfindungsgemäß über einen zweiten Funktionsblock 9. In den zweiten Funktionsblock 9 sind eine oder mehrere Echtzeit-Zusatzfunktionen im Bedarfsfall während des Betriebs des Reglers und damit während der Ausführung der Echtzeit-Grundfunktionen ladbar.

Auch ist es möglich, dass solche Echtzeit-Zusatzfunktionen des Antriebsreglers 1, die aktuell in den zweiten Funktionsblock 9 geladen sind, im Bedarfsfall von einer neuen Echtzeit-Zusatzfunktion überschrieben werden. Der zweite Funktionsblock 9 ist demnach während des Betriebs des Reglers nachladbar sowie überladbar bzw. überschreibbar.

Es ist möglich, dass die Echtzeit-Zuatzfunktionen von der übergeordneten Automatisierungseinrichtung 4 bereitgestellt und über die Busverbindung 3 in den zweiten Funktionsblock 9 geladen werden. Die übergeordneten Automatisierungseinrichtung 4 kann die oder jede Echtzeit-Zuatzfunktion auch über die Internetverbindung 5 vom weiteren Automatisierungsgerät 6 laden und dann über die Busverbindung 3 an den zweiten Funktionsblock 9 übergeben. Alternativ ist es jedoch auch möglich, dass die Echtzeit-Zusatzfunktionen von der Automatisierungseinrichtung 6 bereitgestellt und über die Internetverbindung 7 unmittelbar vom Antriebsregler 1 in den zweiten Funktionsblock 9 geladen werden.

FIG 1 verdeutlicht das Zusammenspiel zwischen Echtzeit-Grundfunktionen des Antriebsreglers 1 und Echtzeit-Zusatzfunktionen beispielhaft an einem Diagnosetool. So sind, wie bereits oben erwähnt, in dem ersten Funktionsblock 8 festinstallierte Echtzeit-Grundfunktionen des Antriebsreglers 1 abgelegt. Hierbei handelt es sich zum Bespiel um die Stromregelung oder Antriebsregelung des Antriebsreglers 1. Weiterhin können im Antriebsregler 1 in einem dritten Funktionsblock 10 auch maschinenunabhängige sowie kundenunabhängige Diagnosefunktionen dauerhaft integriert und damit fest installiert sein. Bei solchen maschinenunabhängigen bzw. kundenunspezifischen Diagnosefunktionen handelt es sich zum Beispiel um eine Trace-Funktion oder FFT-Funktion. Mit einer solchen Trace-Funktion sind interne Signale des Antriebsreglers in einem äquidistanten Zeittakt aufzeichenbar. Eine FFT-Funktion erlaubt es, aus diesen mithilfe der Trace-Funktion aufgezeichneten Messwerten eine Frequenzgangsanalyse anzufertigen. Hierzu müssen die im dritten Funktionsblock 10 des Antriebsreglers 1 festinstallierten Diagnosetools selbstverständlich auf Daten des ersten Funktionsblocks 8, nämlich der Echtzeit-Grundfunktionen, zugreifen. Dies ist in FIG 1 anhand der Pfeile 11 visualisiert.

Soll nun der Regler 1 neben den maschinenunspezifischen sowie kundenunspezifischen Funktionen, die im ersten und gegebenenfalls dritten Funktionsblock 8 bzw. 10 des Antriebsreglers 1 dauerhaft installiert sind, weitere jedoch maschinenspezifische und damit kundenspezifische Diagnosefunktionen ausführen, so sind diese, wie bereits oben erwähnt, während des Betriebs des Antriebsreglers 1 und damit während der Ausführung der Echtzeit-Grundfunktionen ohne Unterbrechung derselben in den zweiten Funktionsblock 9 nachladbar.

So ist es möglich, dass eine solche Echtzeit-Zusatzfunktion, die in den zweiten Funktionsblock 9 nachgeladen werden soll, auf dem Automatisierungsgerät 6 mithilfe einer Einrichtung 12 erstellt wird und dann entweder unter Zwischenschaltung der übergeordneten Automatisierungseinrichtung 4 oder unmittelbar ohne Zwischenschaltung der Automatisierungseinrichtung 4 über die entsprechende Internetverbindung 5 bzw. 7 in den zweiten Funktionsblock 9 des Antriebsreglers 1 geladen wird. Die in den zweiten Funktionsblock 9 geladene Echtzeit-Zusatzfunktion, die im hier gezeigten Ausführungsbeispiel maschinenspezifische und damit kundenspezifische Diagnosefunktionen ausführt, liefert entsprechende Messwerte über die Internetverbindung 5 bzw. 7 an die Automatisierungseinrichtung 6, die dort in einer Datenbank 13 abgelegt werden. Die Datenbank 13 stellt die in derselben abgelegten Messwerte einer Auswerteeinrichtung 14 zur Verfügung. Der Datenaustausch zwischen dem zweiten Funktionsblock 9 bzw. den in dem zweiten Funktionsblock abgelegten Echtzeit-Zusatzfunktionen und dem übergeordneten Automatisierungsgerät 4 bzw. dem Automatisierungsgerät 6 ist in FIG 1 durch Pfeile 15, 16 visualisiert.

Wie bereits mehrfach erwähnt, sind die maschinenspezifischen bzw. kundenspezifischen Echtzeit-Zusatzfunktionen, die in den zweiten Funktionsblock 9 geladen werden, während des Betriebs des Reglers und damit während der Ausführung der Echtzeit-Grundfunktionen in den zweiten Funktionsblock 9 nachladbar. Die Ausführung der im ersten Funktionsblock 8 festinstallierten Echtzeit-Grundfunktionen sowie gegebenenfalls die Ausführung der im dritten Funktionsblock 10 festinstallierten, maschinenunabhängigen Diagnosetools wird demnach beim Nachladen der maschinenspezifischen Echtzeit-Zusatzfunktionen in den zweiten Funktionsblock 9 nicht beeinträchtigt. Wie FIG 1 verdeutlicht, sind zur Ausführung der in den zweiten Funktionsblock 9 nachladbaren Echtzeit-Zusatzfunktionen jedoch Schnittstellen zwischen dem ersten Funktionsblock 8 und dem zweiten Funktionsblock 9 sowie dem dritten Funktionsblock 10 und dem zweiten Funktionsblock 9 erforderlich.

So ist es nämlich für die Ausführung der maschinenabhängigen Diagnosefunktionen erforderlich, dass Daten der Echtzeit-Grundfunktionen an den zweiten Funktionsblock 9 zur Ausführung der maschinenspezifischen Echtzeit-Zusatzfunktionen übermittelt werden. Dies ist in FIG 1 durch einen Pfeil 17 visualisiert. Weiterhin kann es für die Ausführung der in den zweiten Funktionsblock 9 nachgeladenen, maschinenspezifischen Zusatzfunktionen erforderlich sein, Daten mit den im dritten Funktionsblock 10 abgelegten, maschinenunabhängigen Diagnosefunktionen auszutauschen. Dies ist in FIG 1 durch die Pfeile 18 verdeutlicht.

Um nun ein Nachladen der Echtzeit-Zusatzfunktionen während des Betriebs der Regelung und damit während des Ausführens der Echtzeit-Grundfunktionen ohne Beeinträchtigung derselben zu ermöglichen, ist eine Laufzeitüberwachungs-Einrichtung 18 vorhanden.

Mit der Laufzeitüberwachungs-Einrichtung 18 wird sichergestellt, dass die auf dem Antriebsregler 1 standardmäßig ablaufenden zyklischen Funktionen, also die Echtzeit-Grundfunktionen des ersten Funktionsblocks 8 und gegebenenfalls die maschinenunabhängigen Diagnosefunktionen des dritten Funktionsblocks 10, durch den Rechenzeitbedarf der nachladbaren Echtzeit-Zusatzfunktionen des zweiten Funktionsblocks 9 nicht beeinträchtigt werden.

Um dies zu gewährleisten, ermittelt die Laufzeitüberwachungs-Einrichtung 18 die von der oder jeder Echtzeit-Zusatzfunktion des Funktionsblocks 9 benötigte Rechenzeit, wobei dann, wenn die von der oder jeder Echtzeit- Zusatzfunktion benötigte Rechenzeit eine vorgegebene Referenzzeit überschreitet, die oder jede Echtzeit-Zusatzfunktion abgebrochen wird.

Bei der Referenzzeit handelt es sich um eine bei Inbetriebnahme des Antriebsreglers 1 festgelegte bzw. parametrierte, maximal zulässige Rechenzeit für die später nachladbaren Echtzeit-Zusatzfunktionen. So wird hierzu im Antriebsregler 1 eine sogenannte Leerfunktion installiert. Diese Leerfunktion verbraucht die bei der Inbetriebnahme parametrierte, maximal zulässige Rechenzeit der Echtzeit-Zusatzfunktionen, ohne jedoch eine tatsächliche Funktion auszuüben. Beim Nachladen der Echtzeit-Zusatzfunktion in den zweiten Funktionsblock 9 wird diese Leerfunktion von der nachladbaren Echtzeit-Zusatzfunktion überschrieben. Die Inbetriebnahme des Antriebsreglers 1 mit dieser Leerfunktion stellt sicher, dass es nach dem Nachladen der Echtzeit-Zusatzfunktion in den zweiten Funktionsblock 9 nicht zu Rechenzeitproblemen kommt.

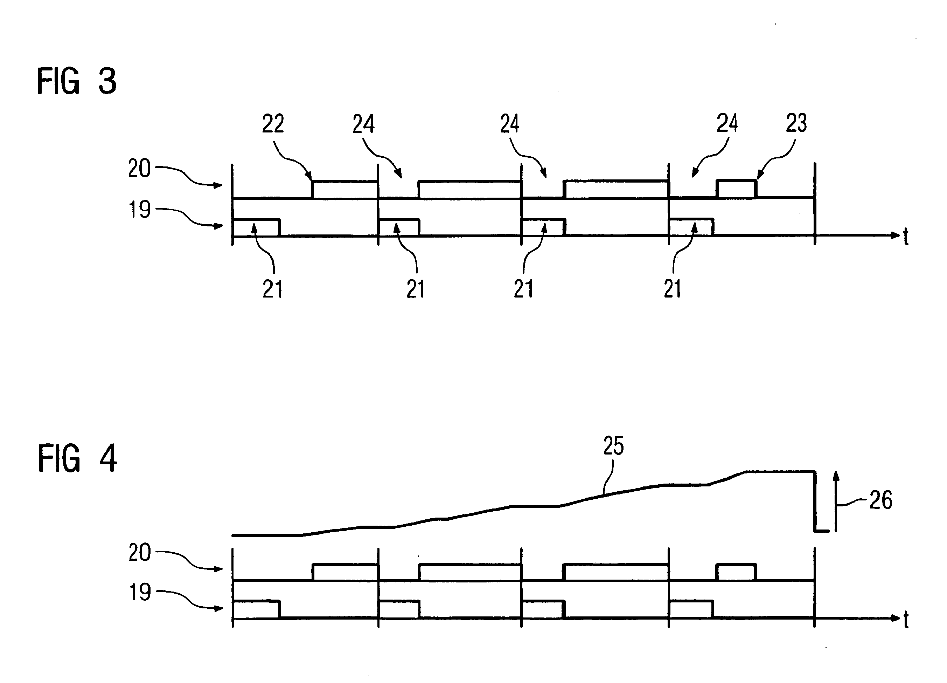

Mit der Laufzeitüberwachungs-Einrichtung 18 wird demnach die von der oder jeden nachladbaren Echtzeit-Zusatzfunktion benötigte Rechenzeit überwacht. Dies wird nachfolgend in Verbindung mit Figuren 3 und 4 in größerem Detail erläutert.

So zeigt FIG 3 zwei vom Antriebsregler 1 abzuarbeitende Tasks 19, 20. Bei einer ersten Task 19 handelt es sich um eine Echtzeit-Grundfunktion, bei einer zweiten Task 20 um eine nachladbare Echtzeit-Zusatzfunktion. Die Task 19 der Echtzeit-Grundfunktion wird zyklisch innerhalb eines vorgegebenen Takts aktiviert und abgearbeitet. Blöcke 21 visualisieren die von der Echtzeit-Grundfunktion während eines Zyklus verbrauchte Rechenzeit. Die Task 19 der Echtzeit-Grundfunktion verfügt über eine höhere Priorität wie die Task 20 der Echtzeit-Zusatzfunktion. So zeigt FIG 3, dass die Task 20 der Echtzeit-Zusatzfunktion zu einem Zeitpunkt 22 innerhalb des ersten dargestellten Zyklus gestartet wird, zu welchem die Task 19 der Echtzeit-Grundfunktion bereits abgearbeitet wurde. Sobald jedoch zu Beginn eines neuen Takts bzw. Zyklus die Task 19 der Echtzeit-Grundfunktion wieder aktiviert wird, wird die Task 20 der Echtzeit-Zusatzfunktion solange deaktiviert, bis die Task 19 der Echtzeit-Grundfunktion innerhalb des zweiten Zyklus abgearbeitet werden konnte. Erst dann, wird die Echtzeit-Zusatzfunktion wieder aktiviert. Dies wird zyklisch sooft hintereinander ausgeführt, bis zu einem Zeitpunkt 23 die Task 20 der Echtzeit-Zusatzfunktion beendet werden kann. Die Pfeile 24 in FIG 3 verdeutlichen die Unterbrechung der Task 20 der Echtzeit-Zusatzfunktion durch die prioritätshöhere Task 19 der Echtzeit-Grundfunktion.

Hieraus wird ersichtlich, dass zwischen einer Brutto-Rechenzeit und einer Netto-Rechenzeit der Task 20 der Echtzeit-Zusatzfunktion zu unterscheiden ist. Bei der Brutto-Rechenzeit handelt es sich um die absolute Zeit, die zwischen den beiden Zeitpunkten 22 und 23, also zwischen dem Starten der Task 20 und dem Beenden derselben, vergangen ist. Wird von dieser absoluten Zeit zwischen dem Zeitpunkt 22 und dem Zeitpunkt 23 die Zeit abgezogen, zu welcher die Task 20 der Echtzeit-Zusatzfunktion durch die prioritätshöhere Task 19 der Echtzeit-Grundfunktion unterbrochen war, so ergibt sich hieraus die Netto-Rechenzeit der Task 20.

Zur exakten Messung der Netto-Rechenzeit und der Brutto-Rechenzeit der Task 20 der Echtzeit-Zusatzfunktion umfasst die Laufzeitüberwachungs-Einrichtung 18 vorzugsweise mehrere Timer. Die nicht dargestellten Timer können durch Software-Interrupts und/oder Hardware-Interrupts gesteuert bzw. gestartet und gestoppt werden. Die Timer sind im Detail nicht dargestellt. Ein erster Timer wird beim zyklischen Aufruf einer nachladbaren Echtzeit-Zusatzfunktion durch einen entsprechenden Software-Interrupt zum Zeitpunkt 22 gestartet und am Ende der entsprechenden Task zum Zeitpunkt 23 ebenfalls durch einen Software-Interrupt gestoppt. Dieser erste Timer dient demnach der Ermittlung der Brutto-Rechenzeit der Task 20 der nachgeladenen Echtzeit-Zusatzfunktion.

Weiterhin ist ein zweiter Timer vorhanden, der zusätzlich durch entsprechende Interrupts der prioritätshöheren Task 19 einer Echtzeit-Grundfunktion des Antriebsreglers 1 gestoppt bzw. gestartet werden kann. So wird dieser zweite Timer dann gestoppt, wenn die prioritätshöhere Task 19 der Echtzeit-Grundfunktion gestartet wird. Entsprechend wird der zweite Timer gestartet, wenn die prioritätshöhere Task 19 der Echtzeit-Grundfunktion beendet ist. So wird sichergestellt, dass der zweite Timer nur dann weiterzählt, wenn die zweite Task 20 der Echtzeit-Zusatzfunktion tatsächlich Rechenzeit verbraucht. FIG 4 verdeutlicht die von diesem zweiten Timer ermittelte Netto-Rechenzeit der Task 20 durch eine Kurve 25, wobei der Pfeil 26 den Zählerinhalt des zweiten Timers und damit die ermittelte Netto-Rechenzeit der nachladbaren Echtzeit-Zusatzfunktion visualisiert.

Die ermittelte Netto-Rechenzeit wird erfindungsgemäß mit der parametrierten Referenzzeit, also der maximal zulässigen Rechenzeit für die nachladbare Echtzeit-Zusatzfunktion verglichen. Wenn diese Referenzzeit von der Netto-Rechenzeit überschritten wird, wird die nachladbare Echtzeit-Zusatzfunktion abgebrochen und vom Antriebsregler 1 eine entsprechende Fehlermeldung generiert. Hierdurch ist sichergestellt, dass die Funktionalität der Echtzeit-Grundfunktionen durch die Einbindung der nachladbaren Echtzeit-Zusatzfunktionen während des Betriebs des Antriebsreglers und während der Ausführung der Echtzeit-Grundfunktionen nicht beeinträchtigt wird. Ebenso kann die ermittelte Brutto-Rechenzeit der nachgeladenen Echtzeit-Zusatzfunktion mit einem Referenzwert für die Brutto-Laufzeit verglichen werden. Hierdurch wird sichergestellt, dass eine nachzuladende Echtzeit-Zusatzfunktion sicher abgearbeitet werden kann.

Nach einem weiteren Aspekt der Erfindung ist eine Speicherplatzzugriffsüberwachungs-Einrichtung 27 vorhanden.

Die Speicherplatzzugriffsüberwachungs-Einrichtung 27 stellt sicher, dass in den zweiten Funktionsblock 9 nachgeladene Echtzeit-Zusatzfunktionen nicht auf Speicheradressen oder Speicherbereiche zugreifen, die für die im Funktionsblock 8 festinstallierten Echtzeit-Grundfunktionen reserviert sind. Fehlerhafte Speicherzugriffe einer während des Betriebs des Antriebsreglers 1 und damit während des Ausführens der Echtzeit-Grundfunktionen nachgeladenen Echtzeit-Zusatzfunktion werden hierdurch vermieden. Die Speicherüberwachungs-Einrichtung 27 überwacht hierzu alle Speicheradressen auf die von der nachgeladenen Echtzeit-Zusatzfunktion zugegriffen wird. Stimmen diese Speicheradressen nicht mit vorgegebenen Referenzspeicheradressen überein, die für die Echtzeit-Zusatzfunktionen reserviert sind, so wird die nachgeladene Echtzeit-Zusatzfunktion abgebrochen und vom Antriebsregler 1 eine entsprechende Fehlermeldung generiert.

Bei der Inbetriebnahme des Antriebsreglers 1 wird für die nachladbaren Echtzeit-Zusatzfunktionen ein separater Speicherbereich reserviert. Nur auf diesen separaten Speicherbereich können die während des Betriebs des Antriebsreglers 1 nachladbaren Echtzeit-Zusatzfunktionen zugreifen. Um dennoch eine Kommunikation zwischen den Echtzeit-Grundfunktionen und der nachgeladenen Echtzeit-Zusatzfunktion zu ermöglichen, legen die Echtzeit-Grundfunktionen in diesem fest definierten Speicherbereich Kopien ihrer internen Variablen ab. Sollte eine nachgeladene Echtzeit-Zusatzfunktion eine Variable einer Echtzeit-Grundfunktion in unzulässiger Weise manipulieren, so erfolgt dies lediglich bei den Kopien der Variablen der Echtzeit-Grundfunktionen, die in dem fest definierten Speicherbereich abgelegt sind. Die eigentlichen Variablen der Echtzeit-Grundfunktionen, die über für die Echtzeit-Zusatzfunktionen nicht zulässige Speicheradressen adressiert werden, bleiben dann unverändert. Für den Fall, für den also eine Echtzeit-Zusatzfunktion fehlerhaft sein sollte, wird auf Grundlage der Struktur des erfindungsgemäßen Antriebsreglers 1 die Funktion der Echtzeit-Grundfunktionen nicht negativ beeinträchtigt.

Mit anderen Worten ausgedrückt, verwaltet die Speicherplatzzugriffsüberwachungs-Einrichtung 27 demnach zwei definierte Speicherbereiche. Ein erster definierter Speicherbereich ist lediglich für die Echtzeit-Grundfunktionen des ersten Funktionsblocks 8 zugänglich. Ein zweiter Speicherbereich ist von den Echtzeit-Grundfunktionen und zusätzlich von den nachladbaren Echtzeit-Zusatzfunktionen des zweiten Funktionsblocks 9 adressierbar. In diesem zweiten Speicherbereich sind Kopien der Variablen der Echtzeit-Grundfunktionen abgelegt.

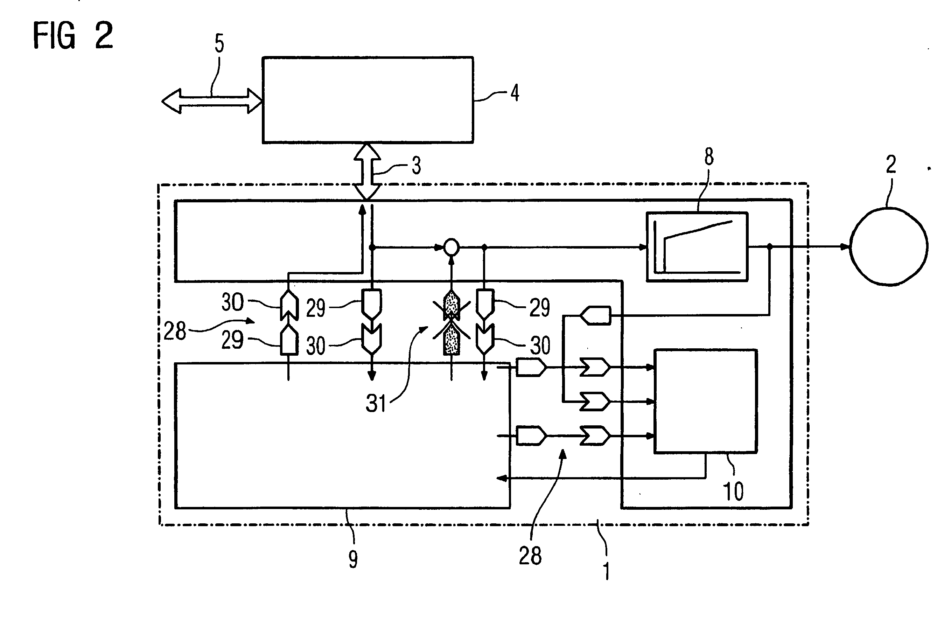

Weiterhin ist bei dem erfindungsgemäßen Antriebsregler 1 ein Datenaustausch zwischen festinstallierten, maschinenunabhängigen Funktionen, wie zum Beispiel den Echtzeit-Grundfunktionen des ersten Funktionsblock 8 und den maschinenunabhängigen Diagnosefunktionen des dritten Funktionsblocks 10, und den nachladbaren, maschinenspezifischen Echtzeit-Zusatzfunktionen des zweiten Funktionsblock 9 über sogenannte Binektor/Konnektor-Verbindungen realisiert. So zeigt FIG 2 mehrere Binektor/Konnektor-Verbindungen 28. Jede dieser Binektor/Konnektor-Verbindungen besteht aus einer Signalquelle 29 und einer entsprechenden Signalsenke 30. So sind, abhängig von der Richtung des Datenflusses, entweder dem zweiten Funktionsblock 9 für die nachladbaren Echtzeit-Zusatzfunktionen oder den Funktionsblöcken 8 bzw. 10 für die festinstallierten Funktionen des Antriebsreglers 1 Signalquellen 29 oder Signalsenken 30 zugeordnet.

Aus Sicherheitsgründen sind für derartige Binektor/Konnektor-Verbindungen 28 beim Nachladen einer Echtzeit-Zusatzfunktion Beschränkungen installiert. So dürfen zum Beispiel beim Nachladen einer Echtzeit-Zusatzfunktion keine Binektor/Konnektor-Verbindungen aufgetrennt werden, die bei der Installation des Antriebsreglers 1 eingerichtet worden sind. Anderenfalls könnte durch eine fehlerhafte, nachzuladende Echtzeit-Zusatzfunktion die Funktionalität der parallel ablaufenden Echtzeit-Grundfunktionen des Antriebsreglers 1 beeinträchtigt werden. Weiterhin dürfen von der nachladbaren Echtzeit-Zusatzfunktion keine Signale in die parallel ablaufenden Echtzeit-Grundfunktion eingespeist werden. Auch hierdurch würde Einfluss auf die Funktionalität der Echtzeit-Grundfunktion genommen. Diese Beschränkung ist in FIG 2 dadurch visualisiert, dass eine Binektor/Konnektor-Verbindung 31, die eine solche additive Überlagerung darstellen würde, durchgestrichen ist.

Mithilfe des erfindungsgemäßen Antriebsreglers 1 können demnach im Gegensatz zum Stand der Technik während des Betriebs des Antriebsreglers 1, insbesondere während der Ausführung von Echtzeit-Grundfunktionen des Antriebsreglers 1, maschinenspezifische bzw. kundenspezifische Echtzeit-Zusatzfunktionen nachgeladen werden. Durch die Nutzung der Laufzeitüberwachungs-Einrichtung 18 und der Speicherplatzzugriffsüberwachungs-Einrichtung 27 wird eine Beeinflussung der festinstallierten Echtzeit-Grundfunktionen des Antriebsreglers 1 beim Nachladen möglicher Echtzeit-Zusatzfunktionen ausgeschlossen.

Die Echtzeit-Zusatzfunktionen sind sowohl über eine Busverbindung 3 von einer übergeordneten Automatisierungseinrichtung 4 als auch über eine Internetverbindung 5 bzw. 7 von einer weiteren Automatisierungseinrichtung 6 ladbar. Erfindungsgemäß sind die nachladbaren Zusatzfunktionen von den festinstallierten Basisfunktionen bzw. Grundfunktionen des Antriebsreglers entkoppelt. Da lediglich temporär benötigte Zusatzfunktionen vom Antriebsregler 1 bedarfsweise nachgeladen werden und auch bereits geladene, nicht mehr benötigte Zusatzfunktionen überschrieben werden, können für den Antriebsregler 1 Hardware-Ressourcen, zum Beispiel Speicherplatz, eingespart werden. Mithilfe der Erfindung kann ein Antriebsregler bereitgestellt werden, in den einerseits lediglich maschinenunabhängige und kundenunspezifische Grundfunktionen und ggf. Diagnosefunktionen integriert sind und in den andererseits maschinenspezifischen und kundenspezifischen Zusatzfunktionen im Bedarfsfall nachgeladen werden, ohne dass der Betrieb des Antriebsreglers 1 bzw. seiner Grundfunktionen unterbrochen werden müsste. Dies eröffnet vielfältige Möglichkeiten für die Integration maschinenspezifischer Diagnosefunktionen, Wartungsfunktionen oder sonstiger Updates für den Antriebsregler 1.

## Patentansprüche

1. Verfahren zum Betreiben eines Reglers, wobei zum Regeln einer zu regelnden Einrichtung mindestens eine festinstallierte Reglerfunktion für eine Echtzeit-Grundfunktion zur Ausführung einer ersten Task (19)ausgeführt wird, und während des Betriebs des Reglers (1) und damit des Ausführens der Reglerfunktion eine Echtzeit-Zusatzfunktion zur Ausführung einer zweiten Task (20) nachgeladen wird, wobei die erste Task eine höhere Priorität als die zweite Task hat, wobei die erste Task in aufeinanderfolgenden Zyklen abgearbeitet wird, wobei die zweite Task zu einem ersten Zeitpunkt (22) innerhalb eines der Zyklen gestartet wird, zu welchem die erste Task innerhalb des einen der Zyklen bereits abgearbeitet worden ist, wobei die zweite Task jeweils zu Beginn darauffolgender Zyklen solange unterbrochen (24) wird, bis die erste Task in dem betreffenden Zyklus abgearbeitet worden ist, wobei die zweite Task zu einem zweiten Zeitpunkt (23) beendet wird, wobei die Netto-Rechenzeit für die Ausführung der zweiten Task durch eine Einrichtung zur Laufzeitüberwachung (18) ermittelt wird, indem die Zeit zwischen dem ersten Zeitpunkt und dem zweiten Zeitpunkt ermittelt und davon die Zeit, während derer die Ausführung der zweiten Task unterbrochen war, abgezogen wird, wobei die Netto-Rechenzeit mit einer parametrierten Referenzzeit verglichen wird, und wobei die Echtzeit-Zusatzfunktion abgebrochen wird, wenn die Netto-Rechenzeit die Referenzzeit überschreitet.

2. Verfahren nach Anspruch 1, wobei die Einrichtung zur Laufzeitüberwachung einen ersten Timer aufweist, der durch einen Software-Interrupt zu dem ersten Zeitpunkt gestartet wird, und durch einen weiteren Software-Interrupt zu dem zweiten Zeitpunkt gestoppt wird.

3. Verfahren nach Anspruch 1 oder 2, wobei die Einrichtung zur Laufzeitüberwachung einen zweiten Timer aufweist, wobei der zweite Timer gestoppt wird, wenn die Echtzeit-Grundfunktion in einem der Zyklen gestartet wird, und wobei der zweite Timer gestartet wird, wenn die Echtzeit-Grundfunktion in dem einen der Zyklen beendet wird.

4. Verfahren nach einem der vorhergehenden Ansprüche, wobei Reglerfunktion für die Echtzeit-Grundfunktion von einem ersten Funktionsblock (8)und die Echtzeit-Zusatzfunktion von einem zweiten Funktionsblock (9) ausgeführt wird.

5. Verfahren nach einem der vorhergehenden Ansprüche, wobei es sich bei dem Regler um einen Antriebsregler handelt.

## Claims

1. Method for operating a controller, with at least one permanently-installed controller function for a real time basic function being implemented to execute a first task (19) in order to control a device to be controlled, and during the operation of the controller (1) and thus the execution of the controller function, a real-time additional function is downloaded to execute a second task (20), with the first task having a higher priority than the second task, with the first task being processed in consecutive cycles, with the second task being started at a first instant (22) within a cycle, at which the first task has already been processed within one of the cycles, with the second task being interrupted in each instance at the start of consecutive cycles until the first task has been processed in the relevant cycle, with the second task being terminated at a second instant (23), with the gross computing time for the execution of the second task being determined by a runtime monitoring device (18), by determining the time between the first instant and the second instant and removing therefrom the time, during which the execution of the second task was interrupted, with the gross computing time being compared with a parameterized reference time and with the real time additional function being interrupted if the gross computing time exceeds the reference time.

2. Method according to claim 1, with the runtime monitoring device having a first timer, which is started by a software interrupt at the first instant and is terminated by a further software interrupt at the second instant.

3. Method according to claim 1 or 2, with the runtime monitoring device having a second timer, with the second timer being terminated, if the real-time basic function is started in one of the cycles and with the second timer being started if the real-time function is terminated in one of the cycles.

4. Method according to one of the preceding claims, with the controller function being executed for the real-time basic function by a first functional block (8) and the real-time additional function being executed by a second functional block (9).

5. Method according to one of the preceding claims, with the controller being a drive controller.

## Revendications

1. Procédé pour faire fonctionner un régulateur, dans lequel, pour la régulation d'un dispositif à réguler, on réalise au moins une fonction de régulateur installée et fixe pour une fonction fondamentale en temps réel pour la réalisation d'une première tâche (19) et, pendant le fonctionnement du régulateur (1) et donc pendant la réalisation de la fonction de régulateur, on charge après coup une fonction supplémentaire en temps réel pour la réalisation d'une deuxième tâche (20), dans lequel la première tâche à une priorité plus grande que la deuxième tâche, dans lequel on traite la première tâche dans des cycles consécutifs, dans lequel on démarre la deuxième tâche à l'intérieur de l'un des cycles à un premier instant (22) auquel la première tâche a déjà été traitée à l'intérieur de ce cycle, dans lequel on interrompt (24) la deuxième tâche à chaque début de cycles suivants jusqu'à ce que la première tâche ait été traitée dans le cycle considéré, dans lequel la deuxième tâche se termine à un instant (23), dans lequel on détermine le temps de calcul net pour la réalisation de la deuxième tâche au moyen d'un dispositif pour la surveillance de temps d'exécution (18) en déterminant le temps entre le premier instant et le deuxième instant et en soustrayant de ce temps le temps pendant lequel la réalisation de la deuxième tâche était interrompue, dans lequel on compare le temps de calcul net à un temps de référence paramétré et dans lequel on interrompt la fonction supplémentaire en temps réel lorsque le temps de calcul net dépasse le temps de référence.

2. Procédé selon la revendication 1, dans lequel le dispositif pour la surveillance de temps d'exécution comporte un premier temporisateur qui est démarré au premier instant par une interruption logicielle et qui est arrêté au deuxième instant par une autre interruption logicielle.

3. Procédé selon la revendication 1 ou 2, dans lequel le dispositif pour la surveillance de temps d'exécution comporte un deuxième temporisateur, dans lequel le deuxième temporisateur est arrêté lorsque la fonction fondamentale en temps réel est démarrée dans l'un des cycles et dans lequel le deuxième temporisateur est démarré lorsque la fonction fondamentale en temps réel est terminée dans ce cycle.

4. Procédé selon l'une des revendications précédentes, dans lequel la fonction de régulateur pour la fonction fondamentale en temps réel est réalisée par un premier bloc fonctionnel (8) et la fonction supplémentaire en temps réel par un deuxième bloc fonctionnel (9).

5. Procédé selon l'une des revendications précédentes, dans lequel le régulateur est un régulateur de dispositif moteur.
